# EUROPEAN PATENT SPECIFICATION

(11) **EP 4 187 770 B1**
(45) Date of publication and mention of the grant of the patent: **21.10.2026**
(21) Application number: 21210795.7
(22) Date of filing: 26.11.2021
(51) Int. Cl.: H02M 3/335, H02M 1/00

(54) **POWER CONTROL OF A POWER CONVERTER BASED ON A VARIABLE MODULATION FREQUENCY**
LEISTUNGSREGELUNG EINES LEISTUNGSWANDLERS BASIEREND AUF EINER VARIABLEN MODULATIONSFREQUENZ
COMMANDE DE PUISSANCE D'UN CONVERTISSEUR DE PUISSANCE SUR LA BASE D'UNE MODULATION DE FRÉQUENCE VARIABLE

(43) Date of publication of application: 31.05.2023
(73) Proprietor: Hitachi Energy Ltd, 8050 Zürich (CH)
(72) Inventor: YUAN, ChunMing, Beijing, 100062 (CN); STEINKE, Juergen, 79774 Albbruck (DE); KLAEUSLER, Martin, 5022 Rombach (CH); SIEMASZKO, Daniel, Ste-Croix, 1450 (CH)
(74) Representative: Vossius & Partner Patentanwälte Rechtsanwälte mbB

(56) References cited:
- EP-A1- 3 024 129
- EP-A1- 3 761 497
- WO-A1-2021/071708
- CN-A- 112 117 908
- CN-A- 112 928 920
- CN-A- 113 364 298
- CN-U- 209 016 943
- FR-A1- 3 050 593
- KWON OWON ET AL: "Highly Efficient Single-Stage DAB Microinverter Using a Novel Modulation Strategy to Minimize Reactive Power", IEEE JOURNAL OF EMERGING AND SELECTED TOPICS IN POWER ELECTRONICS, IEEE, PISCATAWAY, NJ, USA, vol. 10, no. 1, 17 June 2021 (2021-06-17), pages 544 - 552, XP011899378, ISSN: 2168-6777, [retrieved on 20220201], DOI: 10.1109/JESTPE.2021.3090097
- YAQOOB MUHAMMAD ET AL: "A Four-Degrees-of-Freedom Modulation Strategy for Dual-Active-Bridge Series-Resonant Converter Designed for Total Loss Minimization", IEEE TRANSACTIONS ON POWER ELECTRONICS, INSTITUTE OF ELECTRICAL AND ELECTRONICS ENGINEERS, USA, vol. 34, no. 2, 1 February 2019 (2019-02-01), pages 1065 - 1081, XP011701598, ISSN: 0885-8993, [retrieved on 20181218], DOI: 10.1109/TPEL.2018.2865969
- MEI ZHAOZHAO ET AL: "Analysis and Design of two-stage on-board charge for all GaN devices", 2021 IEEE INTERNATIONAL FUTURE ENERGY ELECTRONICS CONFERENCE (IFEEC), IEEE, 16 November 2021 (2021-11-16), pages 1 - 6, XP033996991, [retrieved on 20211222], DOI: 10.1109/IFEEC53238.2021.9661618
- VAN HOEK HAUKE ET AL: "Enhanced operating strategy for a three-phase dual-active-bridge converter including frequency variation", 2015 IEEE 11TH INTERNATIONAL CONFERENCE ON POWER ELECTRONICS AND DRIVE SYSTEMS, IEEE, 9 June 2015 (2015-06-09), pages 492 - 498, XP033194765, [retrieved on 20150814], DOI: 10.1109/PEDS.2015.7203466

## Description

The present disclosure relates to a method and a system for power control of a power converter.

A power converter, in particular a solid-state transformer, SST, is widely used in applications with varying load conditions. In applications such as an electrical vehicle charging station, the load requires a power converter to support a wide voltage range while maintaining a high power efficiency. Conventionally, a plurality of dual active bridge, DAB, is implemented to form a SST in various input and output configurations. A DAB converter establishes modulated voltage signals at the primary side and the secondary side of a transformer within the DAB converter through modulating semiconductors bridges, which in turn determines the current flow.

Conventional modulation methods include a phase shift modulation, a trapezoidal current shape modulation, and a triangular current shape modulation. The phase shift modulation is capable of transferring high power, but the power losses is relatively high in comparison to other modulation methods. In contrast, the trapezoidal current shape modulation and the triangular current shape modulation transfer power efficiently, but do not meet the power transfer requirement for a relatively low output to input voltage ratio of the power converter. Thus, there is a need to improve a method and a system for power control of a power converter to achieve a higher power transfer efficiency over a wide voltage

The following prior art documents disclose examples for the control of Dual Active Bridges: CN112117908, CN113364298, CN112928920, FR3050593, EP3024129, WO2021071708, EP3761497, and the IEEE publications "Highly Efficient Single-Stage DAB Microinverter Using a Novel Modulation Strategy to Minimize Reactive Power", "A Four-Degrees-of-Freedom Modulation Strategy for Dual-Active-Bridge Series-Resonant Converter Designed for Total Loss Minimization", "Enhanced operating strategy for a three-phase dual-active-bridge converter including frequency variation".

The present disclosure relates to a method according to claim 1, a controller according to claim 7, and a system according to claim 13 for power control of a dual active bridge, DAB, power converter.

Various exemplary embodiments of the present disclosure disclosed herein are directed to providing features that will become readily apparent by reference to the following description when taken in conjunction with the accompanying drawings. In accordance with various embodiments, exemplary systems, methods, and devices are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.

### Description of the Drawings

FIG. 1 illustrates a required DC current and power of a power converter.
FIG. 2a) through FIG. 2d) illustrate the power converter topologies according to embodiments of the present disclosure.
FIG. 3 illustrates a dual active bridge, DAB, converter according to the invention.
FIG. 4a) through FIG. 4d) illustrate modulation methods according to embodiments of the present disclosure.
FIG. 5 illustrates the power transfer boundaries of various modulation methods according to embodiments of the present disclosure.
FIG. 6 illustrates a flow chart of a power control method according to an embodiment of the present disclosure.
FIG. 7 illustrates the power losses of a power converter using various modulation methods according to the embodiments of the present disclosure.
FIG. 8 illustrates the peak currents of a power converter using various modulation methods according to the embodiments of the present disclosure.
FIG. 9 illustrates an exemplary function of a switching frequency of a power converter according to an embodiment of the present disclosure.
FIG. 10 illustrates the power losses of a power converter using various modulation methods according to the embodiments of the present disclosure.
FIG. 11 illustrates the peak currents of a dual active bridge using various modulation methods according to the embodiments of the present disclosure.
FIG. 12 illustrates a block diagram of a control structure according to an embodiment of the present disclosure.
FIG. 13 illustrates the simulation parameters of a modulation method according to an embodiment of the present disclosure.
FIG. 14 illustrates the simulation results of a modulation method operating at a constant switching frequency, according to an embodiment of the present disclosure.
FIG. 15 illustrates the simulation results of a modulation method operating at a variable frequency, according to an embodiment of the present disclosure.
FIG. 16 a) and b) illustrate a controller comprising a processor and a system comprising a controller and a power converter, according to an embodiment of the present disclosure.

The invention is defined by the features of the independent claims. The dependent claims recite advantageous embodiments of the invention.

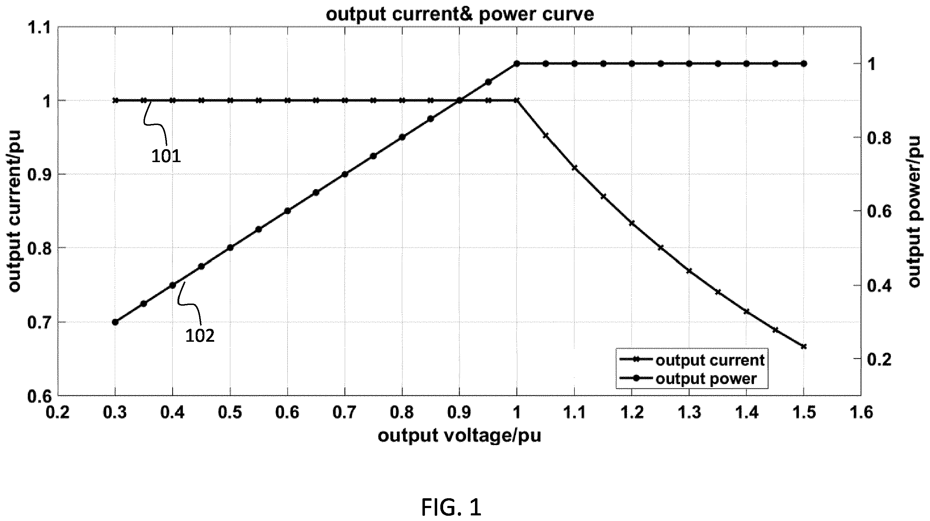

FIG. 1 illustrates a required DC current and power of a power converter. Particularly, applications such as electrical vehicle charging infrastructure requires the power converter to provide the output voltage from 0.3 pu to 1.5 pu, where pu denotes per unit. The output current 101 needs to be kept constant in a nominal DC current in the output voltage range of 0.3 pu ^{~} 1 pu, and the output power 102 needs to be kept constant in a nominal power in the output voltage range of 1 pu ^{~} 1.5 pu.

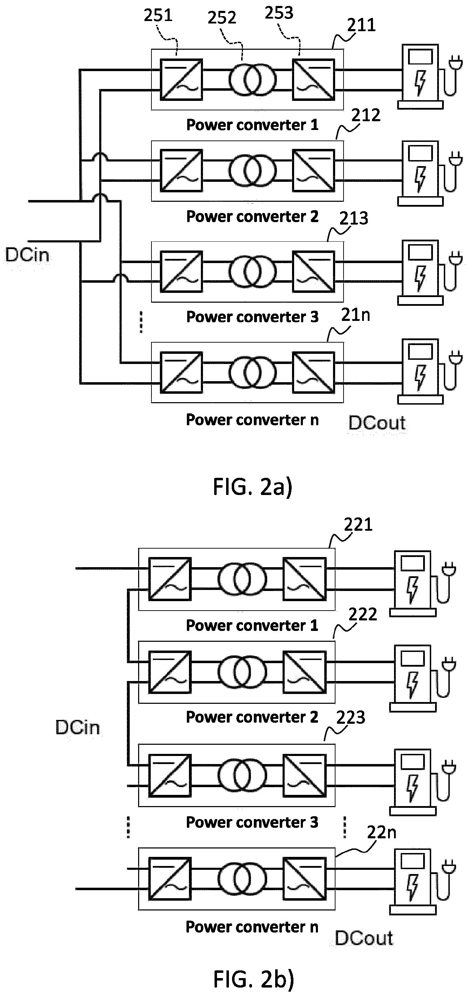

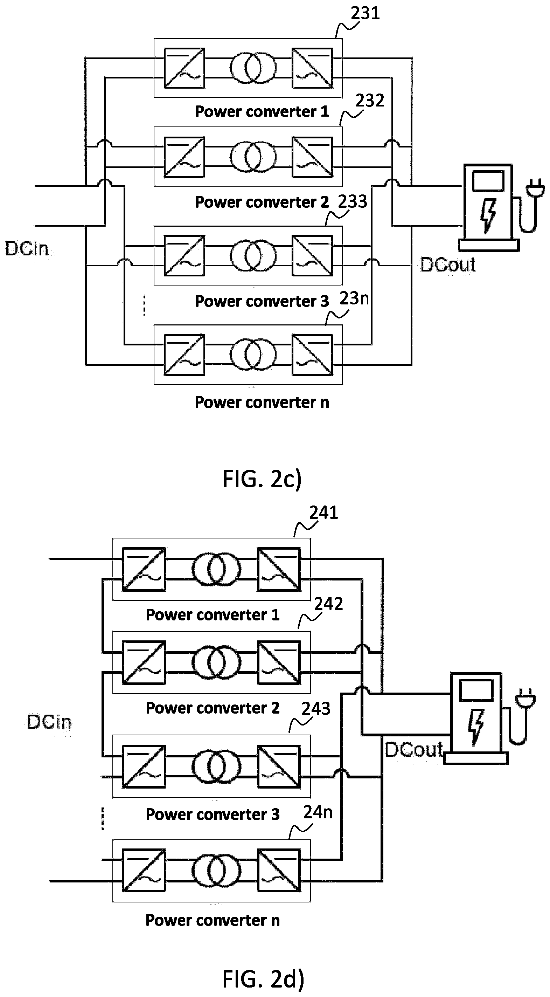

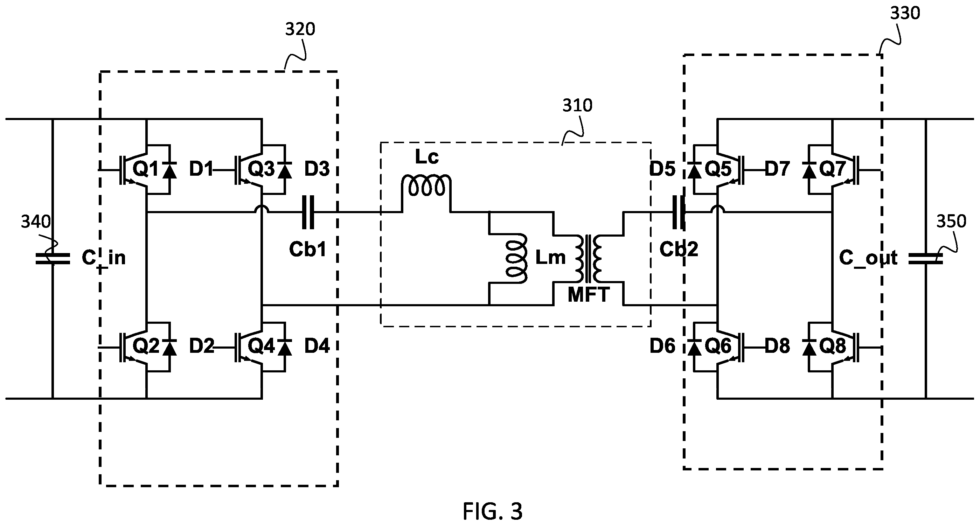

FIG. 2a) through FIG. 2d) illustrate the various power converter topologies according to embodiments of the present disclosure. In particular, FIG. 2a), FIG. 2b), FIG. 2c) and FIG. 2d) illustrate exemplary power converters comprising a plurality of power converter arranged in various configurations. The *n (n* being an integer) power converters 211^{~}21n shown in FIG. 2a) are interconnected in a parallel input, series output topology and the interconnected n power converters 211^{~}21n form a DC/DC common converter. Each of the n power converters 211^{~}21n comprises a DC/AC inverter 251, a transformer 252, and an AC/DC rectifier 253. Similarly, the n power converters 221^{~}22n shown in FIG. 3b) are interconnected in a series input, series output topology and the interconnected n power converters 221^{~}22n form a DC/DC common converter. Each of the n power converters 221^{~}22n comprises the identical components as any one of the n power converters 211^{~}21n shown in FIG. 2a). The n power converters 231^{~}23n shown in FIG. 2 c) are interconnected in a parallel input, parallel output topology and the interconnected n power converters 231^{~}23n form a DC/DC common converter. Each of the n power converters 231^{~}23n comprises the identical components as any one of the n power converters 211^{~}21n shown in FIG. 2a). The n power converters 241^{~}24n shown in FIG. 2d) are interconnected in a series input, parallel output topology and the interconnected n power converters 241^{~}24n form a DC/DC common converter. Each of the n power converters 241^{~}24n comprises the identical components as any one of the n power converters 211^{~}21n shown in FIG. 2a).

FIG. 3 illustrates a dual active bridge, DAB, power converter comprising a transformer 310, a primary full bridge 320 at the input, and a secondary full bridge 330 at the output of the converter. The transformer 310 comprises two inductive components Lc and Lm. A first node of the transformer 310 is connected to a first node of the primary full bridge 320 via a series connected capacitor Cb1 and a second node of the transformer 310 is connected to a second node of the primary full bridge 320. Similarly, a first node of the transformer 310 is connected to a first node of the secondary full bridge 330 via a series connected capacitor Cb2 and a second node of the transformer 310 is connected to a second node of the primary full bridge 330. The primary full bridge 320 comprises four diodes D1 to D4 parallel connected to the respective four IGBTs Q1 to Q4 to form a full bridge. The primary full bridge 320 is parallel connected to an input capacitor 340. The secondary full bridge 330 comprises four diodes D5 to D8 parallel connected to the respective four IGBTs Q5 to Q8 to form a full bridge. The secondary full bridge 330 is parallel connected to an output capacitor 350.

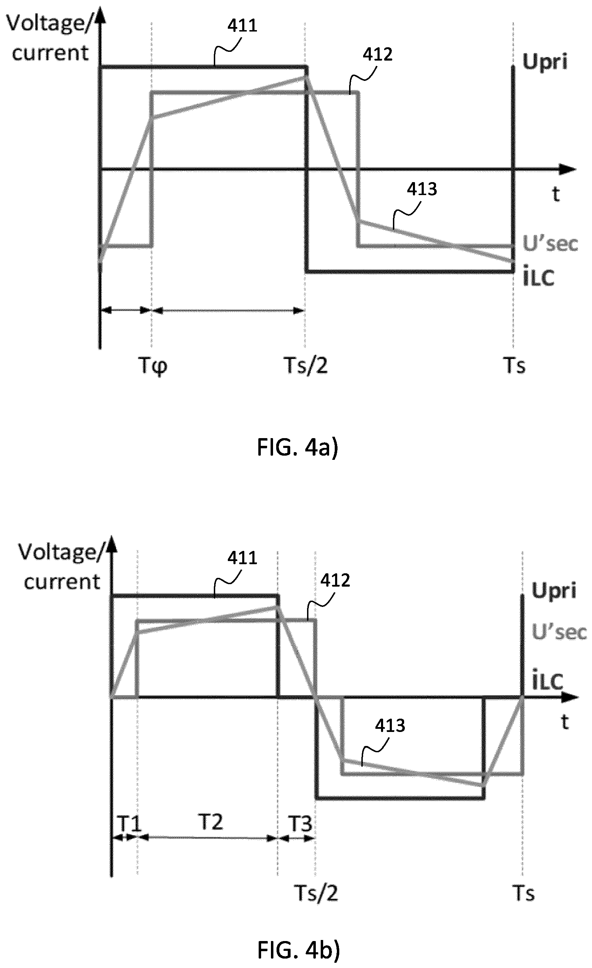

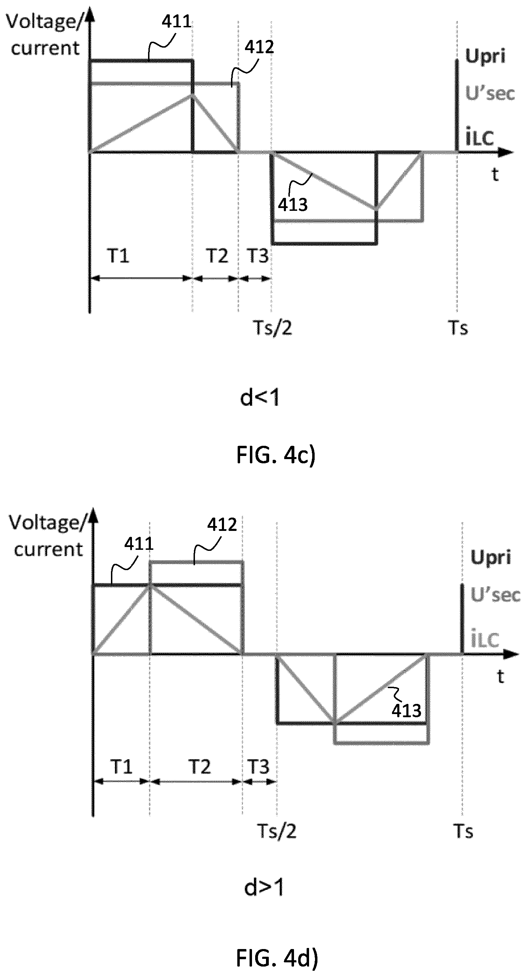

FIG. 4a) through FIG. 4d) illustrate modulation methods according to embodiments of the present disclosure. In particular, FIG. 4a) through FIG. 4d) illustrate the voltages at the primary side and the secondary side of the transformer 310 and the current through the transformer 310 as implemented in FIG. 3. Herein, the voltage over the primary side of the transformer 310 is referred to as the primary voltage 411, the voltage over the secondary side of the transformer 310 is referred to as the secondary voltage 412, and the current through the transformer 310 is referred to as the transformer current 413.

FIG. 4a) illustrates the voltages and the currents established by the phase shift modulation method within one switching period Ts, in particular the primary voltage 411 is higher in amplitude in comparison to the secondary voltage 412. The duty cycle of the primary voltage 411 and the secondary voltage 412 are equally 0.5 and the secondary voltage 412 lags behind the primary voltage 411 by a known phase-shift angle, *T*ϕ. The transformer current 413 linearly increases and decreases based on the difference between the primary voltage 411 and the secondary voltage 412. That is, the phase-shift angle between the two AC square voltages can be used to control the power delivery.

FIG. 4b) illustrates the voltages and the currents established by the trapezoidal current shape modulation method within one switching period Ts. The duty cycle of the primary voltage 411 and the secondary voltage 412 are equal or less than 0.5 and the secondary voltage 412 lags behind the primary voltage 411 by a known phase-shift angle, T1. The duty cycle of the primary voltage 411 and the secondary voltage 412 may or may not be equal to each other. The duty cycle of the primary voltage 411 is adjusted by a known period, T3, and the duty cycle of the secondary voltage 412 is adjusted by a known period, T1. The trapezoidal current shape modulation method establishes a third voltage level, 0V for both primary voltage 411 and the secondary voltage 412 in this case, different from the positive and the negative amplitudes of each of the primary voltage 411 and the secondary voltage 412. The AC square primary voltage 411 and the secondary voltage 412 causes the transformer current 413 to increase from zero at t=0, peak at t=T1+T2, and return to zero at t=Ts/2.

FIG. 4c) and FIG. 4d) illustrate the voltages and the currents established by the triangular current shape modulation. FIG. 4c) and FIG. 4d) illustrate scenarios wherein the voltage ratio, d, of a power converter is less than 1 and greater than 1, respectively. The voltage ratio of a power converter is defined as: $d = {m}_{MFT} \times \frac{{V}_{out}}{{V}_{in}}$ (1) where *n_{MFT}, Vₒᵤₜ,* and *Vᵢₙ* denote a winding ratio of the secondary side and the primary side of the transformer, an output voltage of the power converter, and an input voltage of the power converter, respectively. In FIG. 4c), the duty cycle of the primary voltage 411 is adjusted by a known period, T2+T3, and the duty cycle of the secondary voltage 412 is adjusted by another known period, T3. Consequently, the two AC square voltages cause the transformer current 413 to increase from zero at t=0, peak at t=T1, return to zero at t=T1+T2, and stays zero for the duration of a known period, T3. In FIG. 4d), the duty cycle of the primary voltage 411 is adjusted by a known period, T1, and the duty cycle of the secondary voltage 412 is adjusted by another known period, T3. Consequently, the two AC square voltages cause the transformer current 413 to increase from zero at t=0, peak at t=T1, return to zero at t=T1+T2, and stays zero for the duration of a known period, T3.

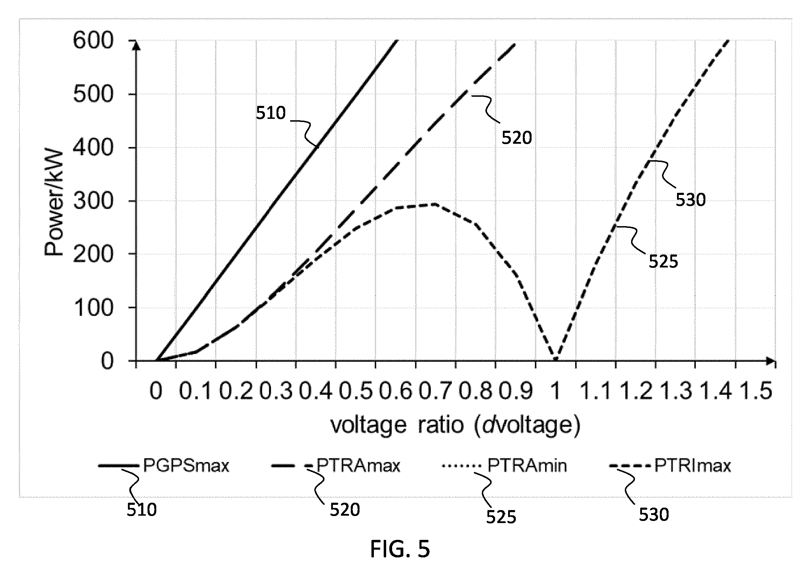

FIG. 5 illustrates the power transfer boundaries of various modulation methods according to embodiments of the present disclosure. FIG. 5 illustrates the different power boundaries of the three above-mentioned modulation methods shown in FIG.4. The y-axis and the x-axis of FIG. 5 represent power and voltage ratio according to eq. (1), respectively. The maximum power boundary for the phase shift modulation method as shown in FIG. 4a), PGPSmax 510, is relatively higher than the other methods, for the same voltage ratio. Comparatively, the upper power boundary for the trapezoidal modulation method, PTRAmax 520, and the upper power boundary for the triangular modulation method, PTRImax 530, are relatively limited with respect to PGPSmax 510. The lower power boundary for the trapezoidal modulation method, PTRAmin 525, follows the same function as PTRImax 530. However, as will be readily apparent in the following sections, the phase shift modulation method exhibits a comparatively lower power efficiency with respect to the trapezoidal modulation method and the triangular modulation method. Thus, it is of interest to find a solution to achieve a high power delivery with a high efficiency, particularly for a low voltage ratio, d.

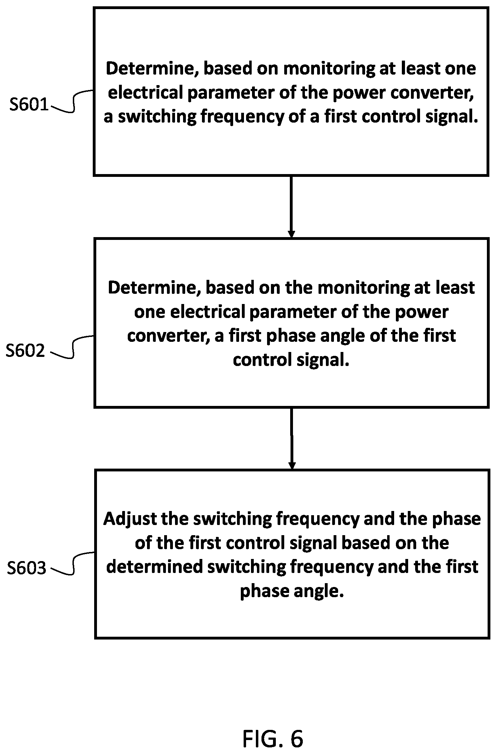

FIG. 6 illustrates a flow chart of a power control method according to an embodiment of the present disclosure. In block S601, the method determines, based on monitoring at least one electrical parameter of the power converter, a switching frequency of a first control signal. In block S602, the method determines, based on the monitoring at least one electrical parameter of the power converter, a first phase angle of the first control signal. Then, in block S603, the method adjusts the switching frequency and the phase of the first control signal based on the determined switching frequency and the first phase angle.

According to an embodiment, the method comprises iterating: determining the switching frequency, determining the first phase angle, and adjusting the first control signal.

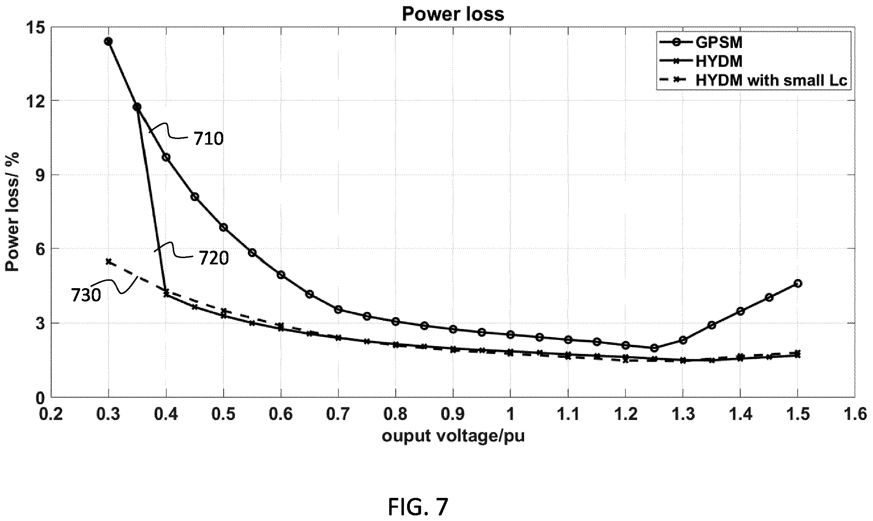

FIG. 7 illustrates the power losses of a power converter using various modulation methods according to the embodiments of the present disclosure. FIG. 7 illustrates the power losses in an exemplary power converter such as the one shown in FIG. 4, as a function of output voltage, in per unit, for different modulation methods: the phase shift modulation method, GPSM 710, a hybrid modulation, HYDM 720, and a hybrid modulation with a small stray inductance in initial stage, HYDM with small Lc 730. The hybrid modulation method combines the phase shift modulation, the trapezoidal current shape modulation, and the triangular current shape modulation methods. In the hybrid modulation, the modulation method is chosen based on the required power delivery and the power efficiency. For instance, one of said three modulation is chosen in the order of the triangular current shape modulation, the trapezoidal current shape modulation, and the general phase shift modulation based on the required power delivery and the power efficiency. Performing the modulation at the switching frequency of 2500 Hz yields the data points plotted in FIG. 7 and the operation points follow the requirements of an electrical vehicle charging infrastructure as shown in FIG. 1. That is, the output is constant at nominal DC current in the range of 0.3 ^{~} 1 × Uout and the output power is constant at the nominal power in the range of 1 ^{~} 1.5× Uout. The power losses of the three plotted modulation methods increases with a decreasing output voltage below the output voltage of 1.2 pu. The power losses of the HYDM 720 increases sharply for the output voltage less than 0.35pu due to the change in the modulation method from either the trapezoidal current shape modulation or the triangular current shape modulation to the phase shift modulation. HYDM with small Lc 730 enables selection of the trapezoidal and triangular modulations for the output voltage less than 0.35pu, thereby achieving a comparatively lower power loss with respect to the GPSM 710 and the HYDM 720.

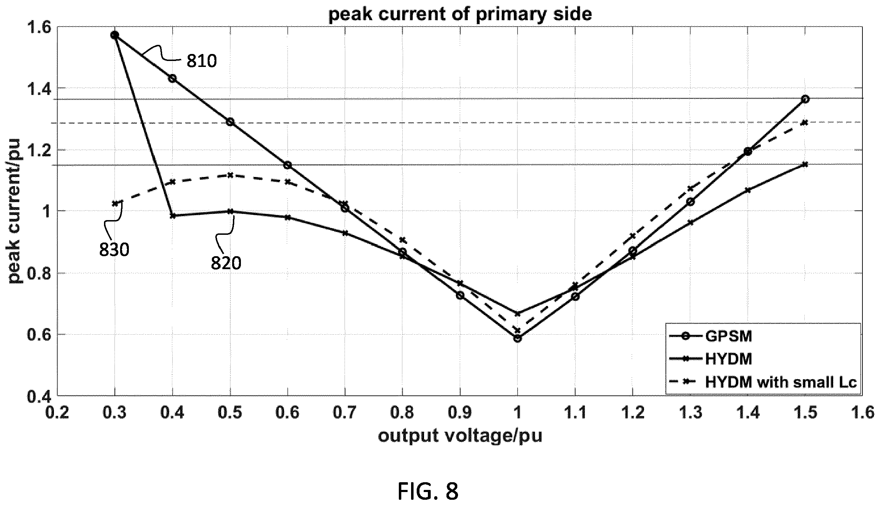

FIG. 8 illustrates the peak currents of a power converter using various modulation methods according to embodiments of the present disclosure. FIG. 8 illustrates the peak current in an exemplary power converter such as the one shown in FIG. 4, as a function of output voltage, in per unit, for the phase shift modulation method, GPSM 810, a hybrid modulation, HYDM 820, and a hybrid modulation with a small stray inductance in initial stage, HYDM with small Lc 830. The same operation conditions as the conditions used to obtain the data points in FIG.7 applies. The peak currents of the HYDM with small Lc 830 yields a larger peak current within the output voltage ranges of 0.4pu and 0.9pu and 1.1pu and 1.5pu with respect to the HYDM 820. The high peak current is disadvantageous for semiconductor selection. In conclusion, the HYDM with small Lc 830 does not achieve the desired technical effect. Thus, the following methodological approaches are considered along with the HYDM 820.

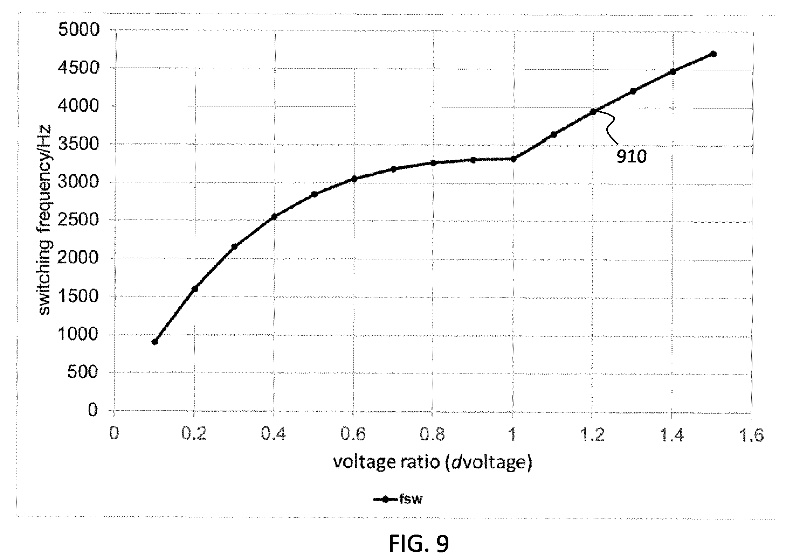

FIG. 9 illustrates an exemplary function of a switching frequency of a power converter according to an embodiment of the present disclosure. Herein, the modulation method is referred as a variable-frequency modulation. The variable-frequency modulation employs the HYDM 820 as presented in FIG. 7 and FIG. 8. Said modulation increases or decreases the switching frequency as a function of the voltage ratio and other parameters. For instance, the variable-frequency modulation function 910 can be computed as: ${f}_{s} \left(d, P\right) = \frac{{U}_{in}^{2}}{4 {L}_{c} P} \times \frac{{d}^{2}}{1 + d + {d}^{2}}$ (2) wherein d denotes the voltage ratio calculated according to eq.(1), P denotes a power transferred by the converter, *L_{c}* denotes the total commutation inductance including a series connected inductor of the transformer 310 and a leakage inductance of the transformer 310, and *Uᵢₙ*denotes the input DC voltage to the converter. The computed function represents the maximum switching frequencies, up to which the converter delivers power with the highest efficiency. The switching frequency may be limited with a maximum and a minimum boundary by considering at least the limitations of the medium frequency transformer, MTF, design, DC capacitors, and a peak current of the semiconductors. In particular, the maximum frequency may be set up by a cooling limitation of semiconductors. A low switching frequency may cause saturation of the MTF.

According to an embodiment, the switching frequency is limited by a maximum frequency and/or a minimum frequency.

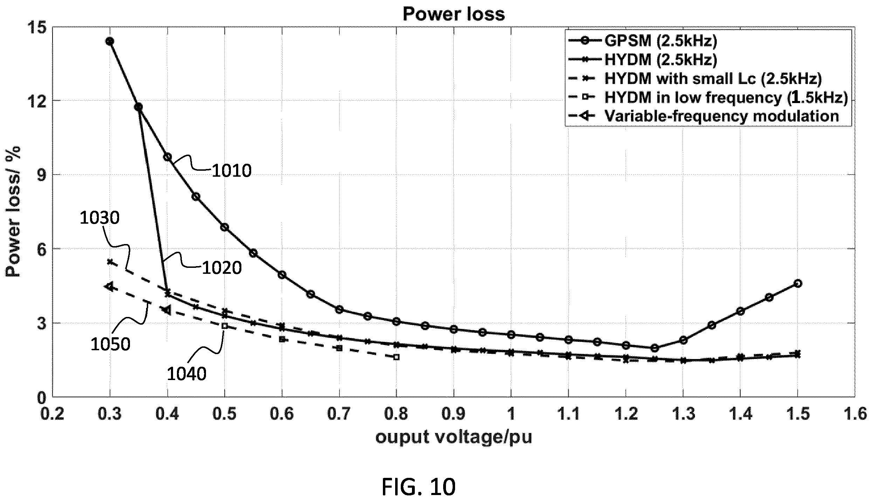

FIG. 10 illustrates the power losses of a power converter using various modulation methods according to embodiments of the present disclosure. FIG. 10 illustrates the power losses in an exemplary power converter such as the one shown in FIG. 4, as a function of output voltage, in per unit, for different modulation methods: the phase shift modulation method operated at 2.5kHz switching frequency, GPSM (2.5kHz) 1010, a hybrid modulation operated at 2.5kHz switching frequency, HYDM (2.5kHz) 1020, a hybrid modulation operated at 2.5kHz switching frequency with a small stray inductance in initial stage, HYDM with small Lc (2.5kHz) 1030, a hybrid modulation operated at 1.5kHz switching frequency, HYDM in low frequency (1.5kHz) 1040, and a variable-frequency modulation 1050. As evident from the figure, the variable-frequency modulation 1050 achieves comparatively lower power losses at the output voltages of 0.3pu and 0.4pu with respect to the GPSM (2.5kHz) 1010, the HYDM (2.5kHz) 1020, and the HYDM with small Lc (2.5kHz) 1030. The difference in power losses between the HYDM in low frequency (1.5kHz) 1040 and the variable-frequency modulation 1050 is negligible at the output voltages of 0.3pu and 0.4pu.

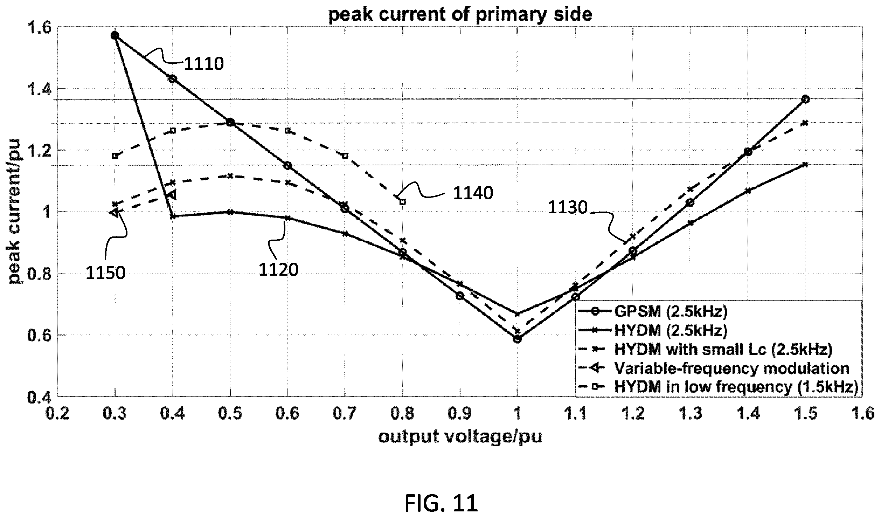

FIG. 11 illustrates the peak currents of a dual active bridge using various modulation methods according to embodiments of the present disclosure. FIG. 11 illustrates the peak current in an exemplary power converter such as the one shown in FIG. 4, as a function of output voltage, in per unit, for different modulation methods: the phase shift modulation method operated at 2.5kHz switching frequency, GPSM (2.5kHz) 1110, a hybrid modulation operated at 2.5kHz switching frequency, HYDM (2.5kHz) 1120, a hybrid modulation operated at 2.5kHz switching frequency with a small stray inductance in initial stage, HYDM with small Lc (2.5kHz) 1130, a hybrid modulation operated at 1.5kHz switching frequency, HYDM in low frequency (1.5kHz) 1140, and a variable-frequency modulation 1150. As evident from the figure, the HYDM in low frequency (1.5kHz) 1140 causes the higher peak current at the primary side of the transformer with respect to the variable-frequency modulation 1150 at the output voltages of 0.3pu and 0.4pu.

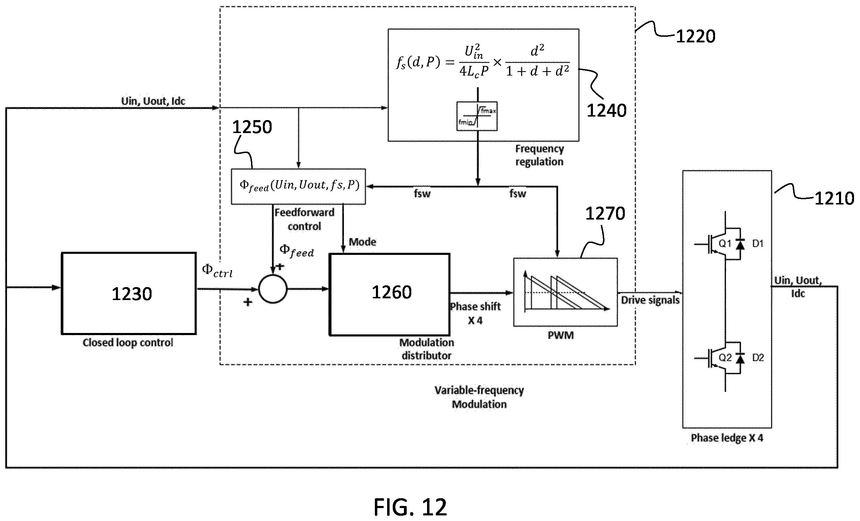

FIG. 12 illustrates a block diagram of a control structure according to an embodiment of the present disclosure. The controller of FIG. 12 implements the variable-frequency modulation method in combination with a hybrid modulation method. The frequency regulation block 1240 computes and/or regulates, based on the electrical parameters of the power converter such as *Uᵢₙ, Uₒᵤₜ, and I_{DC}* as an input, the switching frequency according to the eq.(2). The feedforward control block 1250 receives the computed switching frequency and computes a phase angle, *ϕ_{feed}* and selects one modulation method among the phase shift modulation, the trapezoidal current shape modulation, and the triangular current shape modulation, based on at least the electrical parameters of the power converter such as *Uᵢₙ, Uₒᵤₜ, and I_{DC} ,* and the computed switching frequency as an input. The computed phase angle, *ϕ_{feed},* relaxes the control requirements of the closed-loop control block 1230 and enhances tracking the changes in switching frequency. Feedforward control block 1250 selects the modulation mode primarily based on the power boundaries illustrated in FIG.5. According to an embodiment, the power boundaries are updated, in particular during operation, according to the following formulations: ${P}_{{GPS}_{max}} = \frac{{U}_{in}^{2}}{8 {f}_{s} {L}_{c}} d$ (3) ${P}_{{TRA}_{max}} = \frac{{U}_{in}^{2}}{4 {f}_{s} {L}_{c}} \times \frac{d}{1 + d + {d}^{2}}$ (4) ${P}_{{TRI}_{max}} = \left\{\begin{matrix}\frac{{U}_{in}^{2}}{4 {f}_{s} {L}_{c}} \times {d}^{2} \left(1-d\right) , & d < 1 \\ \frac{{U}_{in}^{2}}{4 {f}_{s} {L}_{c}} \times \left(1-\frac{1}{d}\right) , & d > 1\end{matrix}\right.$ (5) where *P*_{*GPS*ₘₐₓ}, *P_{TRAₘₐₓ}*, and *P_{TRIₘₐₓ}* denotes the maximum power boundaries for the phase shift modulation 510, the trapezoidal current shape modulation 520, and the triangular current shape modulation 530, respectively. According to an embodiment, the feed forward phase angle, *ϕ_{feed}*, of the selected modulation mode is computed according to the following formulations. ${ϕ}_{GPS} = \frac{π}{2} \left(1-\sqrt{1 - \frac{8 {f}_{s} {L}_{c} \left|P\right|}{{dU}_{in}^{2}}}\right) \times sgn \left(P\right)$ (6) ${ϕ}_{TRA} = \frac{π}{2} \times \frac{1}{1 + d + {d}^{2}} \left(1+{d}^{2}-\left(1+d\right)\sqrt{d \left(1-\frac{4 {f}_{s} {L}_{c} \left|P\right|}{{U}_{in}^{2}}\frac{1 + d + {d}^{2}}{{d}^{2}}\right)}\right) sgn \left(P\right)$ (7) ${ϕ}_{TRI} = \left\{\begin{matrix}π \sqrt{\frac{{f}_{s} {L}_{c} P}{{U}_{in}^{2}} \times \frac{1 - d}{{d}^{2}}} \times sgn \left(P\right) , & d < 1 \\ π \sqrt{\frac{{f}_{s} {L}_{c} P}{{U}_{in}^{2}} \times \frac{d - 1}{d}} \times sgn \left(P\right) , & d > 1\end{matrix}\right.$ (8) where *sgn()* denotes a mathematical function that extracts a sign of a value in the bracket. The modulation distributor 1260 computes the phase shift angles based on the selected mode and the sum of the feed forward phase and the output of the closed loop control block 1230. PWM block 1270 generates the drive signals for the succeeding phase ledge block 1210 based on the computed phase shift angles and the computed switching frequency. The generated phase shifted PMW drive signals are depicted in FIG. 4.

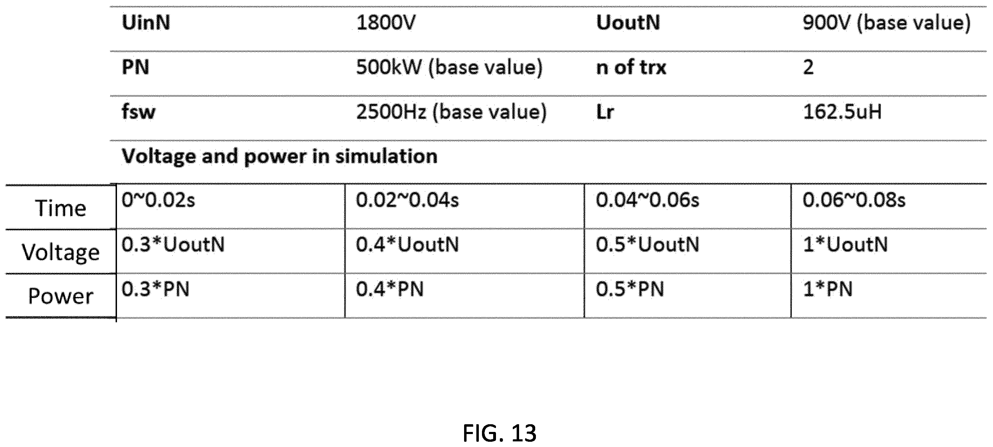

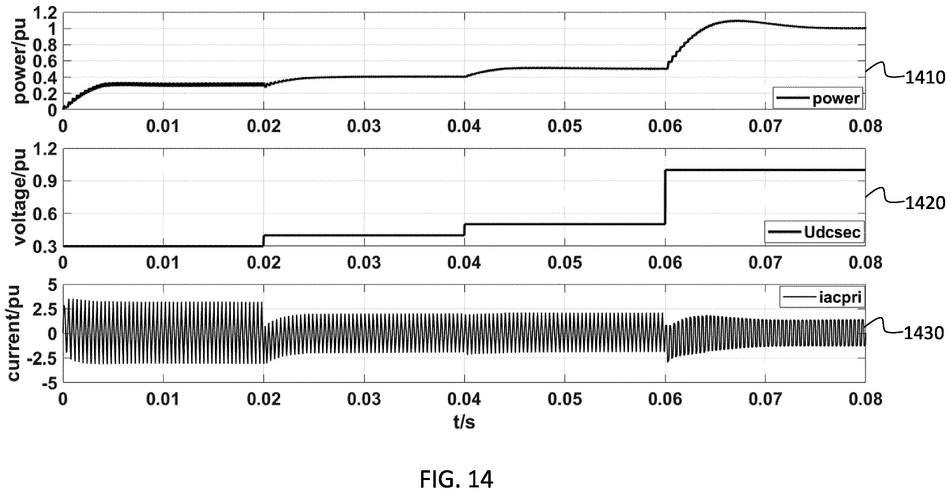

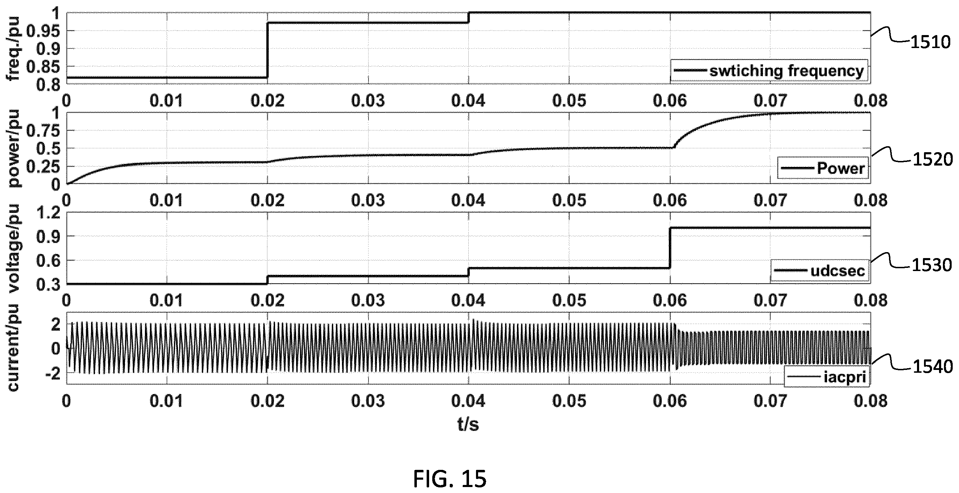

FIG. 13 illustrates the simulation parameters of a modulation method according to an embodiment of the present disclosure. In the simulation, hybrid modulation in combination with variable-frequency modulation methods are employed with the switching frequency limited to 2kHz^{~}2.5kHz. Furthermore, the closed-loop control of the output DC current is used keep a constant DC current of 1 per unit. The table in FIG.13 summarizes the simulation results at 4 voltage levels including 0.3pu, 0.4pu, 0.5pu and 1pu. FIG. 14 and FIG. 15 illustrate the simulation results with respect to time.

FIG. 14 illustrates the simulation results of a modulation method operating at a constant switching frequency, according to an embodiment of the present disclosure. The simulation records the transferred power 1410 and the transformer current 1430 with respect to time for different output voltage levels 1420 as summarized in the table shown in FIG. 13.

FIG 15 illustrates the simulation results of a modulation method operating at a variable frequency, according to an embodiment of the present disclosure. The simulation records the switching frequency 1510, the transferred power 1520, and the transformer current 1540 with respect to time for different output voltage levels 1530 as summarized in the table shown in FIG. 13. The switching frequencies are computed according to the eq.(2) which is reduced to less or equal to 1pu for the simulated voltage levels. Consequently, the variable-frequency modulation method achieves a comparatively lower peak current with respect to the peak current of the identical system operating at a constant switching frequency, as evident from the current plots 1430 and 1540. Furthermore, the variable-frequency modulation method exhibits a comparatively faster settling behavior of power with respect to the identical system operating at a constant switching frequency, as evident from the power plots 1410 and 1520.

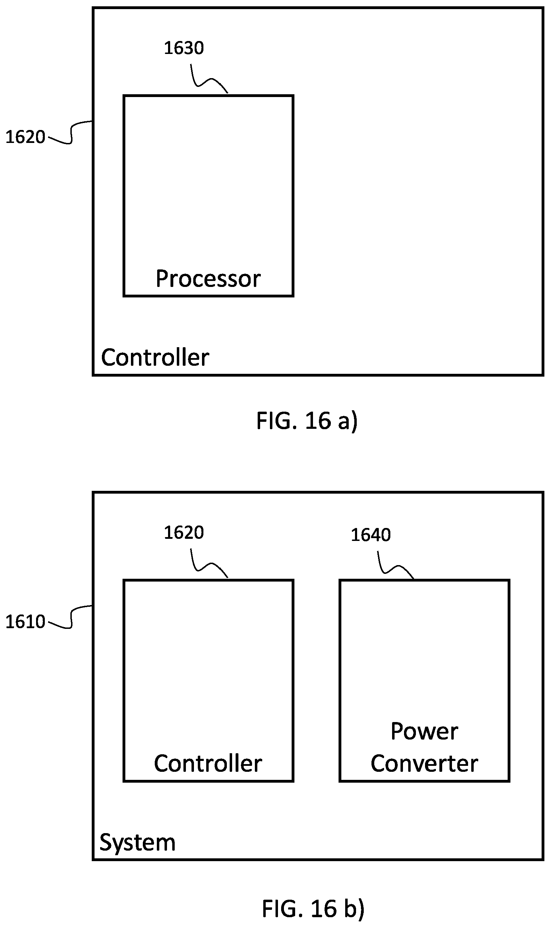

FIG. 16 a) and b) illustrate a controller comprising a processor and a system comprising a controller and a power converter, according to an embodiment of the present disclosure.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative methods, logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Further variations and modifications are possible within the scope of the appended claims.

## Claims

1. A method for power control of a dual active bridge, DAB, power converter, the method comprising:
determining during operation, based on monitoring at least one electrical parameter of the power converter, a switching frequency of a first control signal;
determining during operation, based on the monitoring at least one electrical parameter of the power converter, a first phase angle of the first control signal; and
iteratively adjusting the switching frequency and the first phase angle of the first control signal based on the determined switching frequency and the first phase angle;
wherein:
determining the first phase angle is based on at least one modulation method, the at least one modulation method is selected based on the switching frequency and/or the monitoring at least one electrical parameter of the power converter,
the at least one modulation method comprises or is at least any one of a phase shift modulation, a trapezoidal current shape modulation, or a triangular current shape modulation,
the switching frequency *fₛ* of the power converter representing a maximum switching frequency up to which the converter delivers power with a highest efficiency, is determined based on: ${f}_{s} \left(d, P\right) = \frac{{U}_{in}^{2}}{4 {L}_{c} P} \times \frac{{d}^{2}}{1 + d + {d}^{2}}$
where d, which denotes a voltage ratio of the converter, is computed as $d = {n}_{MFT} \times \frac{{U}_{out}}{{U}_{in}}$, wherein *n_{MFT}, Uᵢₙ, Uₒᵤₜ* denote a winding ratio of a secondary side and a primary side of a transformer of the converter, an output voltage of the converter, and an input voltage of the converter, respectively, P denotes a power transferred by the converter, and L_{c} denotes a total commutation inductance of the transformer (310) including a series connected inductor of the transformer (310) and a leakage inductance of the transformer (310),
the at least one modulation method is selected further based on power boundaries for the at least one modulation method, and
the power boundaries are updated during operation according to the following formulations: ${P}_{{GPS}_{max}} = \frac{{U}_{in}^{2}}{8 {f}_{s} {L}_{c}} d$ ${P}_{{TRA}_{max}} = \frac{{U}_{in}^{2}}{4 {f}_{s} {L}_{c}} \times \frac{d}{1 + d + {d}^{2}}$ ${P}_{{TRI}_{max}} = \left\{\begin{matrix}\frac{{U}_{in}^{2}}{4 {f}_{s} {L}_{c}} \times {d}^{2} \left(1-d\right) , & d < 1 \\ \frac{{U}_{in}^{2}}{4 {f}_{s} {L}_{c}} \times \left(1-\frac{1}{d}\right) , & d > 1\end{matrix}\right.$
where *P*_{*GPS*ₘₐₓ}*, P_{TRAₘₐₓ}*, and *P_{TRIₘₐₓ}* denotes the maximum power boundaries for the phase shift modulation, the trapezoidal current shape modulation, and the triangular current shape modulation, respectively.

2. The method of claim 1, wherein the switching frequency is limited by a minimum frequency.

3. The method of claim 1 or 2, wherein the first phase angle is determined based on at least one further phase angle, which is determined based on the monitoring at least one electrical parameter of the power converter.

4. The method of any one of claims 1 to 3, comprising iteratively adjusting the first control signal.

5. The method of any one of claims 1 to 4, wherein the electrical parameter of the power converter comprises a current of the power converter.

6. The method of any one of claims 1 to 5, wherein a first node of the primary side of the transformer (310) is connected to a first node of a primary full bridge (320) of the DAB power converter via a series connected capacitor (Cb1) and a second node of the primary side of the transformer (310) is connected to a second node of the primary full bridge (320), and a first node of the secondary side of the transformer (310) is connected to a first node of a secondary full bridge (330) of the DAB power converter via a series connected capacitor (Cb2) and a second node of the secondary side of the of the transformer (310) is connected to a second node of the primary full bridge (330).

7. A controller for power control of a dual active bridge, DAB, power converter, comprising a processor, the processor being configured to:
determine during operation, based on monitoring at least one electrical parameter of the power converter, a switching frequency of a first control signal;
determine during operation, based on the monitoring at least one electrical parameter of the power converter, a first phase angle of the first control signal; and
iteratively adjust the switching frequency and the first phase angle of the first control signal based on the determined switching frequency and the first phase angle;
wherein:
the processor is configured to determine the first phase angle based on at least one modulation method
the at least one modulation method is selected based on the switching frequency and/or the monitoring at least one electrical parameter of the power converter,
the at least one modulation method comprises or is at least any one of a phase shift modulation, a trapezoidal current shape modulation, or a triangular current shape modulation,
the switching frequency *fₛ* of the power converter representing a maximum switching frequency up to which the converter delivers power with a highest efficiency, is determined based on: ${f}_{s} \left(d, P\right) = \frac{{U}_{in}^{2}}{4 {L}_{c} P} \times \frac{{d}^{2}}{1 + d + {d}^{2}}$
where d, which denotes a voltage ratio of the converter, is computed as $d = {n}_{MFT} \times \frac{{U}_{out}}{{U}_{in}}$, wherein *n_{MFT}, Uᵢₙ, Uₒᵤₜ* denote a winding ratio of a secondary side and a primary side of a transformer of the converter, an output voltage of the converter, and an input voltage of the converter, respectively, P denotes a power transferred by the converter, and L_{c} denotes a total commutation inductance of the transformer (310) including a series connected inductor of the transformer (310) and a leakage inductance of the transformer (310),
the at least one modulation method is selected further based on power boundaries for the at least one modulation method, and
the power boundaries are updated during operation according to the following formulations: ${P}_{{GPS}_{max}} = \frac{{U}_{in}^{2}}{8 {f}_{s} {L}_{c}} d$ ${P}_{{TRA}_{max}} = \frac{{U}_{in}^{2}}{4 {f}_{s} {L}_{c}} \times \frac{d}{1 + d + {d}^{2}}$ ${P}_{{TRI}_{max}} = \left\{\begin{matrix}\frac{{U}_{in}^{2}}{4 {f}_{s} {L}_{c}} \times {d}^{2} \left(1-d\right) , & d < 1 \\ \frac{{U}_{in}^{2}}{4 {f}_{s} {L}_{c}} \times \left(1-\frac{1}{d}\right) , & d > 1\end{matrix}\right.$
where *P*_{*GPS*ₘₐₓ}*, P_{TRAₘₐₓ},* and *P_{TRIₘₐₓ}* denotes the maximum power boundaries for the phase shift modulation, the trapezoidal current shape modulation, and the triangular current shape modulation, respectively.

8. The controller of claim 7, wherein the switching frequency is limited by a minimum frequency.

9. The controller of claim 7 or 8, wherein the processor is configured to determine the first phase angle based on at least one further phase angle, which is determined based on the monitoring at least one electrical parameter of the power converter.

10. The controller of any one of claims 7 to 9, wherein the processor is configured to iteratively adjust the first control signal.

11. The controller of any one of claims 7 to 10, wherein the electrical parameter of the power converter comprises a current of the power converter.

12. The controller of any one of claims 7 to 11, wherein a first node of the primary side of the transformer (310) is connected to a first node of a primary full bridge (320) of the DAB power converter via a series connected capacitor (Cb1) and a second node of the primary side of the transformer (310) is connected to a second node of the primary full bridge (320), and a first node of the secondary side of the transformer (310) is connected to a first node of a secondary full bridge (330) of the DAB power converter via a series connected capacitor (Cb2) and a second node of the secondary side of the of the transformer (310) is connected to a second node of the primary full bridge (330).

13. A system comprising a controller according to any one of claims 7 to 12 and a dual active bridge, DAB, power converter.

## Patentansprüche

1. Verfahren zur Leistungssteuerung eines Dual-Aktivbrücken-, DAB-, Leistungsumrichters, wobei das Verfahren Folgendes umfasst:
Bestimmen einer Schaltfrequenz eines ersten Steuersignals während des Betriebs basierend auf Überwachen mindestens eines elektrischen Parameters des Leistungsumrichters;
Bestimmen eines ersten Phasenwinkels des ersten Steuersignals während des Betriebs basierend auf dem Überwachen mindestens eines elektrischen Parameters des Leistungsumrichters; und
iteratives Anpassen der Schaltfrequenz und des ersten Phasenwinkels des ersten Steuersignals basierend auf der bestimmten Schaltfrequenz und dem ersten Phasenwinkel;
wobei:
das Bestimmen des ersten Phasenwinkels auf mindestens einem Modulationsverfahren basiert,
das mindestens eine Modulationsverfahren basierend auf der Schaltfrequenz und/oder dem Überwachen mindestens eines elektrischen Parameters des Leistungsumrichters ausgewählt wird,
das mindestens eine Modulationsverfahren mindestens eines von einer Phasenverschiebungsmodulation, einer trapezförmigen Stromformmodulation oder einer dreieckigen Stromformmodulation umfasst oder ist,
die Schaltfrequenz fₛ des Leistungsumrichters, die eine maximale Schaltfrequenz repräsentiert, bis zu der der Umrichter Leistung mit einem höchsten Wirkungsgrad liefert, basierend auf Folgendem bestimmt wird: ${f}_{s} \left(d, P\right) = \frac{{U}_{in}^{2}}{4 {L}_{c} P} \times \frac{{d}^{2}}{1 + d + {d}^{2}}$
wobei d, das ein Spannungsverhältnis des Umrichters bezeichnet, als $d = {n}_{MFT} \times \frac{{U}_{out}}{{U}_{in}}$ berechnet wird, wobei n_{MFT}, Uᵢₙ, Uₒᵤₜ ein Wicklungsverhältnis einer Sekundärseite und einer Primärseite eines Transformators des Umrichters, eine Ausgangsspannung des Umrichters bzw. eine Eingangsspannung des Umrichters entsprechend bezeichnen, P eine durch den Umrichter transferierte Leistung bezeichnet und L_{c} eine Gesamtkommutierungsinduktivität des Transformators (310) einschließlich einer in Reihe verbundenen Induktivität des Transformators (310) und einer Leckinduktivität des Transformators (310) bezeichnet,
das mindestens eine Modulationsverfahren ferner basierend auf Leistungsgrenzen für das mindestens eine Modulationsverfahren ausgewählt wird, und
die Leistungsgrenzen während eines Betriebs gemäß den folgenden Formeln aktualisiert werden: ${P}_{{GPS}_{max}} = \frac{{U}_{in}^{2}}{8 {f}_{s} {L}_{c}} d$ ${P}_{{TRA}_{max}} = \frac{{U}_{in}^{2}}{4 {f}_{s} {L}_{c}} \times \frac{d}{1 + d + {d}^{2}}$ ${P}_{{TRI}_{max}} = \left\{\begin{matrix}\frac{{U}_{in}^{2}}{4 {f}_{s} {L}_{c}} \times {d}^{2} \left(1-d\right) , & d < 1 \\ \frac{{U}_{in}^{2}}{4 {f}_{s} {L}_{c}} \times \left(1-\frac{1}{d}\right) , & d > 1\end{matrix}\right.$
wobei *P_{GPSₘₐₓ}*, *P_{TRAₘₐₓ}*, *P_{TRIₘₐₓ}* die maximalen Leistungsgrenzen für die Phasenverschiebungsmodulation, die trapezförmige Stromformmodulation, und die dreieckige Stromformmodulation entsprechend bezeichnen.

2. Verfahren nach Anspruch 1, wobei die Schaltfrequenz durch eine minimale Frequenz begrenzt ist.

3. Verfahren nach Anspruch 1 oder 2, wobei der erste Phasenwinkel basierend auf mindestens einem weiteren Phasenwinkel bestimmt wird, der basierend auf dem Überwachen mindestens eines elektrischen Parameters des Leistungsumrichters bestimmt wird.

4. Verfahren nach einem der Ansprüche 1 bis 3, das iteratives Anpassen des ersten Steuersignals umfasst.

5. Verfahren nach einem der Ansprüche 1 bis 4, wobei der elektrische Parameter des Leistungsumrichters einen Strom des Leistungsumrichters umfasst.

6. Verfahren nach einem der Ansprüche 1 bis 5, wobei ein erster Knoten der Primärseite des Transformators (310) über einen in Reihe verbundenen Kondensator (Cb1) mit einem ersten Knoten einer primären Vollbrücke (320) des DAB-Leistungsumrichters verbunden ist und ein zweiter Knoten der Primärseite des Transformators (310) mit einem zweiten Knoten der primären Vollbrücke (320) verbunden ist, und ein erster Knoten der Sekundärseite des Transformators (310) über einen in Reihe verbundenen Kondensator (Cb2) mit einem ersten Knoten einer sekundären Vollbrücke (330) des DAB-Leistungsumrichters verbunden ist und ein zweiter Knoten der Sekundärseite des Transformators (310) mit einem zweiten Knoten der primären Vollbrücke (330) verbunden ist.

7. Steuerung zur Leistungssteuerung eines Dual-Aktivbrücken-, DAB-, Leistungsumrichters, welche einen Prozessor umfasst, wobei der Prozessor zu Folgendem konfiguriert ist:
Bestimmen einer Schaltfrequenz eines ersten Steuersignals während des Betriebs basierend auf Überwachen mindestens eines elektrischen Parameters des Leistungsumrichters;
Bestimmen eines ersten Phasenwinkels des ersten Steuersignals während des Betriebs basierend auf dem Überwachen mindestens eines elektrischen Parameters des Leistungsumrichters; und
iteratives Anpassen der Schaltfrequenz und des ersten Phasenwinkels des ersten Steuersignals basierend auf der bestimmten Schaltfrequenz und dem ersten Phasenwinkel;
wobei:
der Prozessor dazu konfiguriert ist, den ersten Phasenwinkel basierend auf mindestens einem Modulationsverfahren zu bestimmen,
das mindestens eine Modulationsverfahren basierend auf der Schaltfrequenz und/oder dem Überwachen mindestens eines elektrischen Parameters des Leistungsumrichters ausgewählt wird,
das mindestens eine Modulationsverfahren mindestens eines von einer Phasenverschiebungsmodulation, einer trapezförmigen Stromformmodulation oder einer dreieckigen Stromformmodulation umfasst oder ist,
die Schaltfrequenz fₛ des Leistungsumrichters, die eine maximale Schaltfrequenz repräsentiert, bis zu der der Umrichter Leistung mit einem höchsten Wirkungsgrad liefert, basierend auf Folgendem bestimmt wird: ${f}_{s} \left(d, P\right) = \frac{{U}_{in}^{2}}{4 {L}_{c} P} \times \frac{{d}^{2}}{1 + d + {d}^{2}}$
wobei d, das ein Spannungsverhältnis des Umrichters bezeichnet, als $d = {n}_{MFT} \times \frac{{U}_{out}}{{U}_{in}}$ berechnet wird, wobei n_{MFT}, Uᵢₙ, Uₒᵤₜ ein Wicklungsverhältnis einer Sekundärseite und einer Primärseite eines Transformators des Umrichters, eine Ausgangsspannung des Umrichters bzw. eine Eingangsspannung des Umrichters entsprechend bezeichnen, P eine durch den Umrichter transferierte Leistung bezeichnet und L_{c} eine Gesamtkommutierungsinduktivität des Transformators (310) einschließlich einer in Reihe verbundenen Induktivität des Transformators (310) und einer Leckinduktivität des Transformators (310) bezeichnet,
das mindestens eine Modulationsverfahren ferner basierend auf Leistungsgrenzen für das mindestens eine Modulationsverfahren ausgewählt wird, und
die Leistungsgrenzen während eines Betriebs gemäß den folgenden Formeln aktualisiert werden: ${P}_{{GPS}_{max}} = \frac{{U}_{in}^{2}}{8 {f}_{s} {L}_{c}} d$ ${P}_{{TRA}_{max}} = \frac{{U}_{in}^{2}}{4 {f}_{s} {L}_{c}} \times \frac{d}{1 + d + {d}^{2}}$ ${P}_{{TRI}_{max}} = \left\{\begin{matrix}\frac{{U}_{in}^{2}}{4 {f}_{s} {L}_{c}} \times {d}^{2} \left(1-d\right) , & d < 1 \\ \frac{{U}_{in}^{2}}{4 {f}_{s} {L}_{c}} \times \left(1-\frac{1}{d}\right) , & d > 1\end{matrix}\right.$
wobei *P_{GPSₘₐₓ}*, *P_{TRAₘₐₓ}*, *P_{TRIₘₐₓ}* die maximalen Leistungsgrenzen für die Phasenverschiebungsmodulation, die trapezförmige Stromformmodulation, und die dreieckige Stromformmodulation entsprechend bezeichnen.

8. Steuerung nach Anspruch 7, wobei die Schaltfrequenz durch eine minimale Frequenz begrenzt ist.

9. Steuerung nach Anspruch 7 oder 8, wobei der Prozessor dazu konfiguriert ist, den ersten Phasenwinkel basierend auf mindestens einem weiteren Phasenwinkel zu bestimmen, der basierend auf dem Überwachen mindestens eines elektrischen Parameters des Leistungsumrichters bestimmt wird.

10. Steuerung nach einem der Ansprüche 7 bis 9, wobei der Prozessor dazu konfiguriert ist, das erste Steuersignal iterativ anzupassen.

11. Steuerung nach einem der Ansprüche 7 bis 10, wobei der elektrische Parameter des Leistungsumrichters einen Strom des Leistungsumrichters umfasst.

12. Steuerung nach einem der Ansprüche 7 bis 11, wobei ein erster Knoten der Primärseite des Transformators (310) über einen in Reihe verbundenen Kondensator (Cb1) mit einem ersten Knoten einer primären Vollbrücke (320) des DAB-Leistungsumrichters verbunden ist und ein zweiter Knoten der Primärseite des Transformators (310) mit einem zweiten Knoten der primären Vollbrücke (320) verbunden ist, und ein erster Knoten der Sekundärseite des Transformators (310) über einen in Reihe verbundenen Kondensator (Cb2) mit einem ersten Knoten einer sekundären Vollbrücke (330) des DAB-Leistungsumrichters verbunden ist und ein zweiter Knoten der Sekundärseite des Transformators (310) mit einem zweiten Knoten der primären Vollbrücke (330) verbunden ist.

13. System, das eine Steuerung nach einem der Ansprüche 7 bis 12 und einen Dual-Aktivbrücken-, DAB-, Leistungsumrichter umfasst.

## Revendications

1. Procédé de commande de puissance d'un convertisseur de puissance à double pont actif, DAB, le procédé comprenant :
la détermination, pendant le fonctionnement, sur la base de la surveillance d'au moins un paramètre électrique du convertisseur de puissance, d'une fréquence de commutation d'un premier signal de commande ;
la détermination, pendant le fonctionnement, sur la base de la surveillance d'au moins un paramètre électrique du convertisseur de puissance, d'un premier angle de phase du premier signal de commande ; et
le réglage itératif de la fréquence de commutation et du premier angle de phase du premier signal de commande sur la base de la fréquence de commutation déterminée et du premier angle de phase ;
dans lequel :
la détermination du premier angle de phase est basée sur au moins un procédé de modulation,
l'au moins un procédé de modulation est sélectionné sur la base de la fréquence de commutation et/ou de la surveillance d'au moins un paramètre électrique du convertisseur de puissance,
l'au moins un procédé de modulation comprend ou est au moins un quelconque parmi une modulation à décalage de phase, une modulation à forme de courant trapézoïdale ou une modulation à forme de courant triangulaire,
la fréquence de commutation fₛ du convertisseur de puissance, qui représente une fréquence de commutation maximale jusqu'à laquelle le convertisseur fournit de la puissance avec un rendement le plus élevé, est déterminée sur la base de : ${f}_{s} \left(d, P\right) = \frac{{U}_{in}^{2}}{4 {L}_{c} P} \times \frac{{d}^{2}}{1 + d + {d}^{2}}$
où d, qui désigne un rapport de tension du convertisseur, est calculé comme suit $d = {n}_{MFT} \times \frac{{U}_{out}}{{U}_{in}}$ : où n_{MFT}, Uᵢₙ, Uₒᵤₜ désignent respectivement un rapport d'enroulement d'un côté secondaire et d'un côté primaire d'un transformateur du convertisseur, une tension de sortie du convertisseur et une tension d'entrée du convertisseur, P désigne une puissance transférée par le convertisseur, et L_{c} désigne une inductance de commutation totale du transformateur (310) comportant une inductance connectée en série du transformateur (310) et une inductance de fuite du transformateur (310),
l'au moins un procédé de modulation est sélectionné en outre sur la base des limites de puissance pour l'au moins un procédé de modulation, et
les limites de puissance sont mises à jour pendant le fonctionnement selon les formules suivantes : ${P}_{{GPS}_{max}} = \frac{{U}_{in}^{2}}{8 {f}_{s} {L}_{c}} d$ ${P}_{{TRA}_{max}} = \frac{{U}_{in}^{2}}{4 {f}_{s} {L}_{c}} \times \frac{d}{1 + d + {d}^{2}}$ ${P}_{{TRI}_{max}} = \left\{\begin{matrix}\frac{{U}_{in}^{2}}{4 {f}_{s} {L}_{c}} \times {d}^{2} \left(1-d\right) , & d < 1 \\ \frac{{U}_{in}^{2}}{4 {f}_{s} {L}_{c}} \times \left(1-\frac{1}{d}\right) , & d > 1\end{matrix}\right.$
où *P_{GPSₘₐₓ}, P_{TRAₘₐₓ} P_{TRIₘₐₓ}* désignent respectivement les limites de puissance maximales pour la modulation à décalage de phase, la modulation à forme de courant trapézoïdale et la modulation à forme de courant triangulaire.

2. Procédé selon la revendication 1, dans lequel la fréquence de commutation est limitée par une fréquence minimale.

3. Procédé selon la revendication 1 ou 2, dans lequel le premier angle de phase est déterminé sur la base d'au moins un autre angle de phase, qui est déterminé sur la base de la surveillance d'au moins un paramètre électrique du convertisseur de puissance.

4. Procédé selon l'une quelconque des revendications 1 à 3, comprenant le réglage itératif du premier signal de commande.

5. Procédé selon l'une quelconque des revendications 1 à 4, dans lequel le paramètre électrique du convertisseur de puissance comprend un courant du convertisseur de puissance.

6. Procédé selon l'une quelconque des revendications 1 à 5, dans lequel un premier nœud du côté primaire du transformateur (310) est connecté à un premier nœud d'un pont complet primaire (320) du convertisseur de puissance DAB via un condensateur connecté en série (Cb1) et un deuxième nœud du côté primaire du transformateur (310) est connecté à un deuxième nœud du pont complet primaire (320), et un premier nœud du côté secondaire du transformateur (310) est connecté à un premier nœud d'un pont complet secondaire (330) du convertisseur de puissance DAB via un condensateur connecté en série (Cb2) et un deuxième nœud du côté secondaire du transformateur (310) est connecté à un deuxième nœud du pont complet primaire (330).

7. Contrôleur pour la commande de puissance d'un convertisseur de puissance à double pont actif, DAB, comprenant un processeur, le processeur étant configuré pour :
déterminer, pendant le fonctionnement, sur la base de la surveillance d'au moins un paramètre électrique du convertisseur de puissance, une fréquence de commutation d'un premier signal de commande ;
déterminer, pendant le fonctionnement, sur la base de la surveillance d'au moins un paramètre électrique du convertisseur de puissance, un premier angle de phase du premier signal de commande ; et
régler itérativement la fréquence de commutation et du premier angle de phase du premier signal de commande sur la base de la fréquence de commutation déterminée et du premier angle de phase;
dans lequel :
le processeur est configuré pour déterminer le premier angle de phase sur la base d'au moins un procédé de modulation,
l'au moins un procédé de modulation est sélectionné sur la base de la fréquence de commutation et/ou de la surveillance d'au moins un paramètre électrique du convertisseur de puissance,
l'au moins un procédé de modulation comprend ou est au moins un quelconque parmi une modulation à décalage de phase, une modulation à forme de courant trapézoïdale ou une modulation à forme de courant triangulaire,
la fréquence de commutation fₛ du convertisseur de puissance, qui représente une fréquence de commutation maximale jusqu'à laquelle le convertisseur fournit de la puissance avec un rendement le plus élevé, est déterminée sur la base de : ${f}_{s} \left(d, P\right) = \frac{{U}_{in}^{2}}{4 {L}_{c} P} \times \frac{{d}^{2}}{1 + d + {d}^{2}}$
où d, qui désigne un rapport de tension du convertisseur, est calculé comme suit $d = {n}_{MFT} \times \frac{{U}_{out}}{{U}_{in}}$ : où n_{MFT}, Uᵢₙ, Uₒᵤₜ désignent respectivement un rapport d'enroulement d'un côté secondaire et d'un côté primaire d'un transformateur du convertisseur, une tension de sortie du convertisseur et une tension d'entrée du convertisseur, P désigne une puissance transférée par le convertisseur, et L_{c} désigne une inductance de commutation totale du transformateur (310) comportant une inductance connectée en série du transformateur (310) et une inductance de fuite du transformateur (310),
l'au moins un procédé de modulation est sélectionné en outre sur la base des limites de puissance pour l'au moins un procédé de modulation, et
les limites de puissance sont mises à jour pendant le fonctionnement selon les formules suivantes : ${P}_{{GPS}_{max}} = \frac{{U}_{in}^{2}}{8 {f}_{s} {L}_{c}} d$ ${P}_{{TRA}_{max}} = \frac{{U}_{in}^{2}}{4 {f}_{s} {L}_{c}} \times \frac{d}{1 + d + {d}^{2}}$ ${P}_{{TRI}_{max}} = \left\{\begin{matrix}\frac{{U}_{in}^{2}}{4 {f}_{s} {L}_{c}} \times {d}^{2} \left(1-d\right) , & d < 1 \\ \frac{{U}_{in}^{2}}{4 {f}_{s} {L}_{c}} \times \left(1-\frac{1}{d}\right) , & d > 1\end{matrix}\right.$
où *P_{GGPSₘₐₓ}, P_{TRAₘₐₓ} P_{TRIₘₐₓ}* désignent respectivement les limites de puissance maximales pour la modulation à décalage de phase, la modulation à forme de courant trapézoïdale et la modulation à forme de courant triangulaire.

8. Contrôleur selon la revendication 7, dans lequel la fréquence de commutation est limitée par une fréquence minimale.

9. Contrôleur selon la revendication 7 ou 8, dans lequel le processeur est configuré pour déterminer le premier angle de phase sur la base d'au moins un autre angle de phase, qui est déterminé sur la base de la surveillance d'au moins un paramètre électrique du convertisseur de puissance.

10. Contrôleur selon l'une quelconque des revendications 7 à 9, dans lequel le processeur est configuré pour régler itérativement le premier signal de commande.

11. Contrôleur selon l'une quelconque des revendications 7 à 10, dans lequel le paramètre électrique du convertisseur de puissance comprend un courant du convertisseur de puissance.

12. Contrôleur selon l'une quelconque des revendications 7 à 11, dans lequel un premier nœud du côté primaire du transformateur (310) est connecté à un premier nœud d'un pont complet primaire (320) du convertisseur de puissance DAB via un condensateur connecté en série (Cb1) et un deuxième nœud du côté primaire du transformateur (310) est connecté à un deuxième nœud du pont complet primaire (320), et un premier nœud du côté secondaire du transformateur (310) est connecté à un premier nœud d'un pont complet secondaire (330) du convertisseur de puissance DAB via un condensateur connecté en série (Cb2) et un deuxième nœud du côté secondaire du transformateur (310) est connecté à un deuxième nœud du pont complet primaire (330) .

13. Système comprenant un contrôleur selon l'une quelconque des revendications 7 à 12 et un convertisseur de puissance à double pont actif, DAB.
